# FASCICULE DE BREVET EUROPEEN

(11) **EP 3 362 314 B1**
(45) Date de publication et mention de la délivrance du brevet: **15.04.2020**
(21) Numéro de dépôt: 16793954.5
(22) Date de dépôt: 10.10.2016
(51) Int. Cl.: B60N 2/60, B60N 2/22

(54) **SIEGE EQUIPE D'UNE COMMANDE AMELIOREE**
SITZ MIT VERBESSERTER STEUERUNG
SEAT PROVIDED WITH IMPROVED CONTROL

(30) Priorité: 12.10.2015 FR 1559690
(43) Date de publication de la demande: 22.08.2018
(73) Titulaire: Renault S.A.S., 92100 Boulogne-Billancourt (FR)
(72) Inventeur: LESUEUR, Gregory, 78280 Montigny le Bretonneux (FR)
(86) Numéro de dépôt international: PCT/FR2016/052611
(87) Numéro de publication internationale: WO 2017/064403

(56) Documents cités:
- EP-A1- 1 939 032
- WO-A1-2014/077389
- US-B1- 7 237 846

## Description

L'invention se rapporte à un siège équipé d'une commande améliorée.

Généralement un siège de véhicule est doté d'une assise et d'un dossier réglable. Une commande de siège est matérialisée par une poignée d'actionnement située sur le coté dudit siège, ladite poignée étant apte à être manœuvrée en rotation pour régler l'inclinaison du dossier. Cette poignée est montée sur un carter destiné à masquer une armature du siège.

Actuellement, il existe un jeu important entre ladite poignée d'actionnement et ledit carter, altérant le rendu visuel du véhicule et donc la qualité perçue. En effet, un jeu important entre ces deux éléments est disgracieux, et peut influencer négativement un client potentiel sur l'achat d'un véhicule. EP 1939032 A1 divulgue un siège de véhicule doté d'une assise et d'un dossier, ledit siège comprenant un carter contre lequel vient en appui une poignée d'actionnement permettant de commander l'inclinaison dudit dossier, ledit carter et ladite poignée étant fixés à une armature dudit siège.

Un siège selon l'invention possède une commande dont la spécificité de montage permet d'obtenir un jeu réduit entre ladite commande et un carter ornemental.

L'invention a pour objet un siège de véhicule doté d'une assise et d'un dossier, ledit siège comprenant un carter contre lequel vient en appui une poignée d'actionnement permettant de commander l'inclinaison dudit dossier, ledit carter et ladite poignée étant fixés à une armature dudit siège.

La principale caractéristique d'un siège selon l'invention est que le carter est muni d'au moins un clip à ressort destiné à interagir avec l'armature pour assurer sa fixation, au moins l'un des deux éléments constitués par la poignée et le carter possédant au moins une protubérance apte à définir le jeu minimum entre ledit carter et ladite poignée lorsque lesdits deux éléments sont au contact l'un de l'autre, ledit clip étant apte à rattraper ledit jeu au moment du montage de la poignée. De cette manière, le carter et la poignée d'actionnement sont fixés à l'armature du siège, le carter étant préférentiellement clippé à ladite armature. Le carter est d'abord préfixé à l'armature du siège au moyen du clip à ressort. La poignée d'actionnement vient ensuite au contact du carter préfixé, puis est poussé contre ledit carter. La mise au contact entre le carter et la poignée d'actionnement est réalisée par l'intermédiaire de la protubérance qui maintient un jeu minimum entre le carter et la poignée. L'ensemble constitué par le carter et la poignée est alors déplacé vers l'armature pour assurer la fixation définitive de la poignée d'actionnement sur le siège. Le clip à ressort, une fois qu'il interagit avec l'armature, empêche tout mouvement du carter vers l'arrière, qui tendrait à éloigner ledit carter de ladite armature. Grâce à ce mécanisme et à la protubérance qui engendre un espace réduite entre le carter et la poignée, la poignée d'actionnement est montée sur le siège en ménageant un jeu minimum avec le carter, améliorant ainsi le rendu visuel du siège et tendant donc à accroitre la qualité perçue. La protubérance peut à la fois être présente sur le carter et sur la poignée d'actionnement, ou bien n'être présente que sur l'un seulement de ces deux éléments. Cette protubérance ajoute une surépaisseur à l'élément sur lequel elle est implantée, et va directement servir à délimiter le jeu entre le carter et la poignée. Dans le cas où une protubérance serait présente à la fois sur le carter et sur la poignée, lesdites protubérances pourraient venir au contact l'une de l'autre et donc se superposer. Préférentiellement, la poignée d'actionnement est clippée sur l'armature du siège

Avantageusement, le carter comprend deux clips à ressort. La présence de deux clips va améliorer les conditions de contact entre l'armature du siège et le carter.

De façon préférentielle, chaque clip comprend une lamelle déformable élastiquement. Au fur et à mesure que le carter est rapproché de l'armature, la lamelle se déforme progressivement et empêche tout mouvement vers l'arrière dudit carter.

Préférentiellement, le carter possède une protubérance sous la forme d'une collerette saillante, la poignée comportant une protubérance sous la forme d'au moins une rainure saillante, chaque rainure venant en appui contre la collerette pour établir le jeu minimum entre le carter et la poignée. Ainsi, lorsque la poignée est définitivement montée sur le support, la mise au contact des rainures avec la collerette va définir l'amplitude du jeu entre le carter et la poignée d'actionnement.

De façon avantageuse, la poignée possède trois rainures radiales, régulièrement espacées autour d'un cercle. De cette manière, deux rainures font entre elles un angle de 120°.

Avantageusement, le carter possède au moins une butée de sécurité empêchant un enfoncement trop important du carter dans l'armature. Une fois que l'ensemble constitué par la poignée d'actionnement et le carter est monté sur le siège, un déplacement supplémentaire du carter vers l'armature serait limité par la présence de cette butée de sécurité.

De façon préférentielle, la butée de sécurité est constituée par deux parois radiales implantées à coté de chaque clip à ressort sur une même face dudit carter.

L'invention a pour autre objet une poignée de commande pour la réalisation d'un siège conforme à l'invention.

L'invention a pour autre objet un carter pour la réalisation d'un siège conforme à l'invention.

L'invention a pour autre objet un procédé de montage d'une poignée d'actionnement pour la réalisation d'un siège selon l'invention.

La principale caractéristique d'un procédé selon l'invention est qu'il comprend les étapes suivantes,
- une étape de mise en place du carter sur l'armature du siège au moyen des clips à ressort,
- une étape de mise en place de la poignée d'actionnement sur le carter,
- une étape de poussée de la poignée contre le carter jusqu'à ce que les rainures de ladite poignée viennent au contact de la collerette saillante du carter, entrainant une compression des clips,
- une étape de fixation de la poignée sur l'armature par clippage.

Un siège selon l'invention présente l'avantage de mettre en œuvre un jeu limité entre la poignée d'actionnement dudit siège et un carter, pour améliorer le rendu visuel dudit siège et donc du véhicule comprenant ledit siège. De plus, ce jeu est obtenu avec des moyens simples et peu coûteux. Un siège selon l'invention, a de plus l'avantage de posséder une poignée d'actionnement dont le montage est facile et rapide à réaliser, car il ne nécessite ni un outillage particulier, ni une manipulation longue et compliquée.

On donne ci-après, une description détaillée d'un siège de véhicule selon l'invention en se référant aux figures suivantes :
- La figure 1 est une vue de coté d'un siège de l'état de la technique indiquant l'emplacement d'une poignée d'actionnement d'un siège,
- La figure 2 est une vue en perspective d'un carter et d'une armature d'un siège selon l'invention,
- La figure 3 est une vue en perspective d'un carter selon l'invention,
- La figure 4 est une vue en perspective d'une poignée d'actionnement d'un siège selon l'invention,
- La figure 5 est une vue en perspective sous un autre angle du carter de la figure 3,
- La figure 6 est une vue de coté d'un carter et d'une poignée d'actionnement d'un siège selon l'invention,
- la figure 7 est une vue en perspective sous un autre angle du carter des figures 3 et 5.

Un siège 1 de véhicule automobile comprend généralement une assise 2, un dossier 3 inclinable et une poignée d'actionnement 4 saillant sur le coté dudit siège, et destinée à régler l'inclinaison du dossier 3. Plus précisément, une mise en rotation manuelle de cette poignée d'actionnement 4 permet d'engendrer une inclinaison du dossier 3.

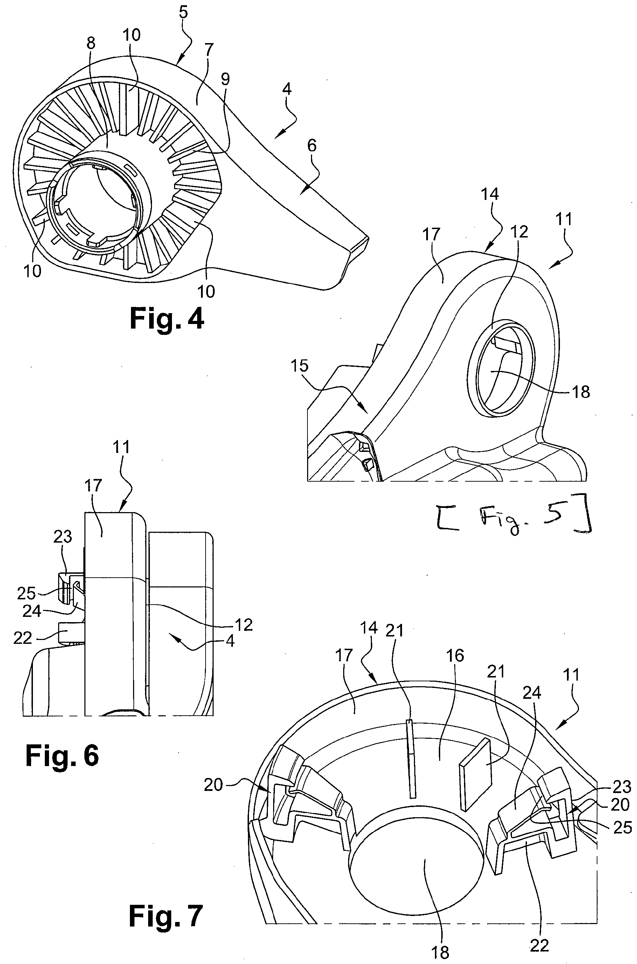

En se référant à la figure 4, une poignée d'actionnement 4 selon l'invention a globalement une forme de poire, permettant de distinguer une partie élargie sensiblement circulaire 5 prolongée par une partie allongée 6. La partie circulaire élargie 5 comprend une paroi périphérique 7 et une paroi cylindrique 8 centrale de plus faible diamètre et délimitant un canal central 9. La paroi périphérique 7 et la paroi cylindrique centrale 8 sont coaxiales et sont reliées l'une à l'autre par un réseau de nervures 9 radiales, dont trois nervures 10 saillent de façon plus importante que les autres. Ces trois nervures 10 sont équitablement réparties autour d'un cercle, deux nervures saillantes 10 faisant entre elles un angle de 120°.

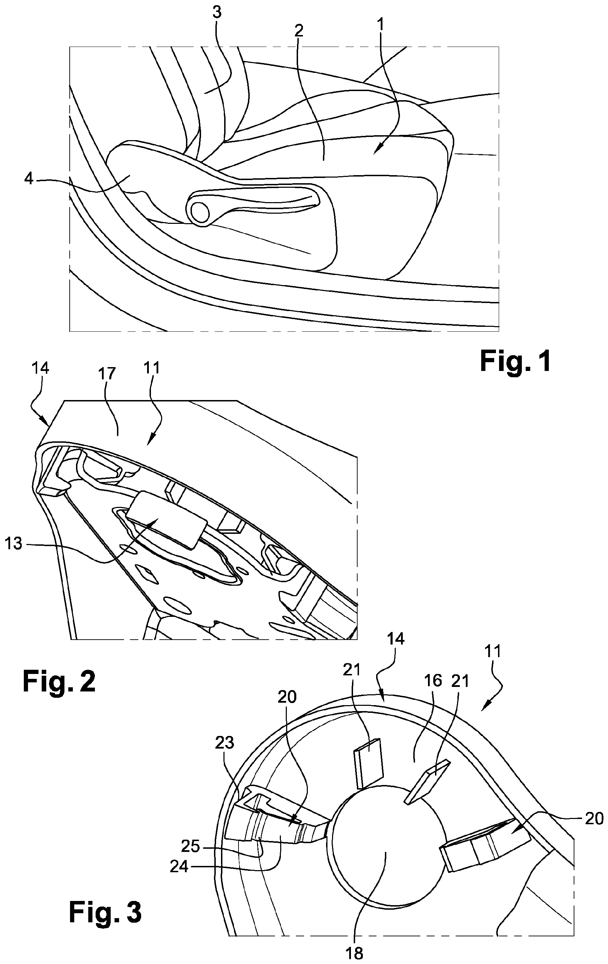

En se référant aux figures 3, 5 et 7, la poignée d'actionnement 4 vient se monter sur un carter 11 destiné à masquer une armature 13 du siège 1 afin d'améliorer le rendu visuel dudit siège 1. Le carter 11 a également une forme de poire, permettant de distinguer une partie élargie sensiblement circulaire 14, prolongée par une partie allongée 15. Cette partie circulaire 14 possède une paroi plane 16 sensiblement circulaire et présentant un bord périphérique 17 s'étendant perpendiculairement à ladite paroi 16. La paroi plane 16 comporte une ouverture centrale circulaire 18, et possède une face interne sur laquelle prend naissance le bord périphérique 17. L'ouverture centrale 18 est bordée par une collerette 12 annulaire saillante.

En se référant aux figures 3 et 7, deux clips 20 à ressort et une butée de sécurité 21 sont implantés sur la face interne du carter 11. La butée de sécurité est constituée de deux parois rigides placées autour de l'ouverture centrale 18 et s'étendant radialement par rapport au centre de ladite ouverture 18. Ces deux parois 21 ont la même hauteur, qui est leur dimension considérée selon une direction perpendiculaire à la face interne du carter 11. Les clips à ressort 20 sont identiques et sont chacun disposés radialement par rapport au centre de l'ouverture 18. Les deux clips 20 encadrent les deux parois rigides 21 constituant la butée de sécurité. Chaque clip 20 présente schématiquement une embase 22 de fixation dont le profil est adapté à celui de la face interne de la paroi 16 plane sur laquelle ils sont implantés. Cette embase 22 est prolongée, d'une part par un segment 23 en forme sensiblement de L, et d'autre part par une lamelle élastique 24 inclinée, ledit segment 23 et ladite lamelle 24 convergeant l'un vers l'autre en ménageant entre eux une fente 25.

En se référant à la figure 2, la disposition des deux clips 20 sur le carter 11 ainsi que celle des deux parois 21 définissant la butée de sécurité, est dictée par la géométrie et la forme de l'armature 13 du siège 1 sur laquelle ledit carter 11 est destiné à être monté.

En se référant à la figure 6, le carter 11 et la poignée d'actionnement 4 sont chacun clippés sur l'armature 13 du siège, de sorte que le carter 11 soit intercalé entre ladite poignée d'actionnement 4 et ladite armature 13. La poignée d'actionnement 11 est ainsi superposée au carter 11, de manière à ce que leurs parties circulaires élargies 5, 14 soient au contact l'une de l'autre, et de manière à ce que leurs parties allongées 6, 15 prolongeant lesdites parties circulaires élargies 5, 14 soient également au contact l'une de l'autre.

Un procédé de montage selon l'invention, permettant de fixer une poignée d'actionnement 4 sur un siège 1 selon l'invention, comprend les étapes suivantes :
- une étape de mise en place du carter 11 sur l'armature 13 du siège 1 au moyen des clips 20 à ressort, comme le montre la figure 2. L'armature 13 est insérée dans la fente 25 de chaque clip 20.
- une étape de mise en place de la poignée d'actionnement 4 sur le carter 11 comme l'indique la figure 6.
- une étape de poussée de ladite poignée 4 contre le carter 11 jusqu'à ce que les rainures 10 saillantes de ladite poignée 4 viennent au contact de la collerette 12 saillante du carter 11, entrainant une compression des clips 20.
- une étape de fixation de la poignée 4 sur le siège 1, se traduisant par un clippage du carter 11 et de la poignée d'actionnement 4 sur l'armature 13 du siège 1. Le jeu minimum entre le carter 11 et la poignée 4 est réalisé au moyen de la mise au contact des rainures saillantes 10 de la poignée 4 contre la collerette 12 du carter 11. Ce jeu dépend donc directement du dimensionnement de ladite collerette 12 et desdites rainures 10.

Un tel procédé engendre un montage sûr et fiable de la poignée d'actionnement 4 sur l'armature 13 du siège 1, en assurant systématiquement un jeu minimum entre ladite poignée 4 et le carter 11 sur lequel elle vient en appui.

## Revendications

1. Siège (1) de véhicule doté d'une assise (2) et d'un dossier (3), ledit siège comprenant un carter (11) contre lequel vient en appui une poignée d'actionnement (4) permettant de commander l'inclinaison dudit dossier (3), ledit carter (11) et ladite poignée (4) étant fixés à une armature (13) dudit siège (1), **caractérisé en ce que** le carter (11) est muni d'au moins un clip (20) à ressort destiné à interagir avec l'armature (13) pour assurer sa fixation, et **en ce qu'**au moins l'un des deux éléments constitués par la poignée (4) et le carter (11) possède au moins une protubérance (10, 12) apte à définir le jeu minimum entre ledit carter (11) et ladite poignée (4) lorsque lesdits deux éléments sont au contact l'un de l'autre, ledit clip (20) étant apte à rattraper ledit jeu au moment du montage de la poignée (4).

2. Siège de véhicule selon la revendication 1, **caractérisé en ce que** le carter (11) comprend deux clips (20) à ressort.

3. Siège de véhicule selon l'une quelconque des revendications 1 ou 2, **caractérisé en ce que** chaque clip (20) comprend une lamelle (24) déformable élastiquement.

4. Siège de véhicule selon la revendication 1 **caractérisé en ce que** le carter (11) possède une protubérance sous la forme d'une collerette (12) saillante, et **en ce que** la poignée (4) possède une protubérance sous la forme d'au moins une rainure saillante (10), chaque rainure (10) venant en appui contre la collerette (12) pour établir le jeu minimum entre le carter (11) et la poignée (4).

5. Siège de véhicule selon la revendication 4, **caractérisé en ce que** la poignée (4) possède trois rainures radiales (10), régulièrement espacées autour d'un cercle.

6. Siège de véhicule selon l'une quelconque des revendications 1 à 5, **caractérisé en ce que** le carter (11) possède au moins une butée (21) de sécurité empêchant un enfoncement trop important du carter (11) dans l'armature (13).

7. Siège selon la revendication 6, **caractérisé en ce que** la butée de sécurité est constituée par deux parois radiales (21) implantées à coté de chaque clip (10) à ressort sur une même face dudit carter (11).

8. Procédé de montage d'une poignée (4) d'actionnement pour la réalisation d'un siège (1) selon l'une quelconque des revendications 1 à 7, **caractérisé en ce qu'**il comprend les étapes suivantes,
- une étape de mise en place du carter (11) sur l'armature (13) du siège (1) au moyen des clips (20) à ressort,
- une étape de mise en place de la poignée (4) d'actionnement sur le carter (11),
- une étape de poussée de la poignée (4) contre le carter (11) jusqu'à ce que les rainures (10) de ladite poignée (4) viennent au contact de la collerette (12) saillante du carter (11), entrainant une compression des clips (20).
- une étape de fixation de la poignée (4) sur l'armature (13) par clippage.

## Patentansprüche

1. Sitz (1) eines Fahrzeugs, welcher mit einer Sitzfläche (2) und einer Lehne (3) versehen ist, wobei der Sitz ein Gehäuse (11) umfasst, gegen das ein Betätigungsgriff (4) anliegt, der es gestattet, die Neigung der Lehne (3) zu steuern, wobei das Gehäuse (11) und der Griff (4) an einer Armatur (13) des Sitzes (1) befestigt sind, **dadurch gekennzeichnet, dass** das Gehäuse (11) mit mindestens einer Federklemme (20) ausgestattet ist, die dazu bestimmt ist, mit der Armatur (13) zu interagieren, um ihre Befestigung sicherzustellen, und dadurch, dass mindestens eines der beiden Elemente, die den Griff (4) und das Gehäuse (11) darstellen, mindestens einen Vorsprung (10, 12) aufweist, der dafür geeignet ist, das minimale Spiel zwischen dem Gehäuse (11) und dem Griff (4) zu definieren, wenn die genannten beiden Elemente miteinander in Kontakt stehen, wobei die Klemme (20) dafür geeignet ist, das Spiel zum Zeitpunkt der Montage des Griffs (4) festzuhalten.

2. Sitz eines Fahrzeugs nach Anspruch 1, **dadurch gekennzeichnet, dass** das Gehäuse (11) zwei Federklemmen (20) umfasst.

3. Sitz eines Fahrzeugs nach einem der Ansprüche 1 oder 2, **dadurch gekennzeichnet, dass** jede Klemme (20) eine elastisch verformbare Lamelle (24) umfasst.

4. Sitz eines Fahrzeugs nach Anspruch 1, **dadurch gekennzeichnet, dass** das Gehäuse (11) einen Vorsprung in der Form eines vorstehenden Kragens (12) aufweist, und dadurch, dass der Griff (4) einen Vorsprung in der Form mindestens einer vorstehenden Rippe (10) aufweist, wobei jede Rippe (10) gegen den Kragen (12) anliegt, um das minimale Spiel zwischen dem Gehäuse (11) und dem Griff (4) festzulegen.

5. Sitz eines Fahrzeugs nach Anspruch 4, **dadurch gekennzeichnet, dass** der Griff (4) drei radiale Rippen (10) aufweist, die regelmäßig um einen Kreis beabstandet sind.

6. Sitz eines Fahrzeugs nach einem der Ansprüche 1 bis 5, **dadurch gekennzeichnet, dass** das Gehäuse (11) mindestens einen Sicherheitsanschlag (21) aufweist, der ein zu tiefes Eindrücken des Gehäuses (11) in die Armatur (13) verhindert.

7. Sitz nach Anspruch 6, **dadurch gekennzeichnet, dass** der Sicherheitsanschlag aus zwei radialen Wänden (21) besteht, die auf der Seite jeder Federklemme (10) auf derselben Fläche des genannten Gehäuses (11) eingesetzt sind.

8. Verfahren zur Montage eines Betätigungsgriffs (4) zur Herstellung eines Sitzes (1) nach einem der Ansprüche 1 bis 7, **dadurch gekennzeichnet, dass** es die folgenden Schritte umfasst:
- einen Schritt des Platzierens des Gehäuses (11) auf der Armatur (13) des Sitzes (1) mit Hilfe von Federklemmen (20),
- einen Schritt des Platzierens des Betätigungsgriffs (4) auf dem Gehäuse (11),
- einen Schritt des Schiebens des Griffs (4) gegen das Gehäuse (11), bis die Rippen (10) des Griffs (4) mit dem vorstehenden Kragen (12) des Gehäuses (11) in Kontakt gelangen, was zu einem Zusammendrücken der Klemmen (20) führt,
- einen Schritt des Befestigens des Griffs (4) auf der Armatur (13) durch Klemmen.

## Claims

1. Vehicle seat (1) equipped with a cushion (2) and a back (3), said seat comprising a casing (11) against which bears an actuating handle (4) allowing control of the tilt of said back (3), said casing (11) and said handle (4) being fixed to a frame (13) of said seat (1), **characterized in that** the casing (11) is provided with at least one sprung clip (20) designed to interact with the frame (13) such as to secure same, and **in that** at least one of the two elements constituted by the handle (4) and the casing (11) has at least one protuberance (10, 12) capable of defining the minimum clearance between said casing (11) and said handle (4) when said two elements are in contact with one another, said clip (20) being capable of taking up said clearance when the handle (4) is mounted.

2. Vehicle seat according to Claim 1, **characterized in that** the casing (11) comprises two sprung clips (20).

3. Vehicle seat according to either of Claims 1 or 2, **characterized in that** each clip (20) comprises an elastically deformable blade (24).

4. Vehicle seat according to Claim 1, **characterized in that** the casing (11) has a protuberance in the form of a projecting collar (12), and **in that** the handle (4) has a protuberance in the form of at least one projecting groove (10), each groove (10) bearing against the collar (12) such as to establish the minimum clearance between the casing (11) and the handle (4).

5. Vehicle seat according to Claim 4, **characterized in that** the handle (4) has three radial slots (10), evenly spaced about a circle.

6. Vehicle seat according to any one of Claims 1 to 5, **characterized in that** the casing (11) has at least one safety stop (21) preventing the casing (11) from sinking too far into the frame (13).

7. Seat according to Claim 6, **characterized in that** the safety stop is constituted by two radial walls (21) positioned beside each sprung clip (10) on one and the same face of said casing (11).

8. Method for mounting an actuating handle (4) for the production of a seat (1) according to any one of Claims 1 to 7, **characterized in that** it comprises the following steps:
- a step of installing the casing (11) on the frame (13) of the seat (1) using the sprung clips (20),
- a step of installing the actuating handle (4) on the casing (11),
- a step of pushing the handle (4) against the casing (11) until the grooves (10) of said handle (4) come into contact with the projecting collar (12) of the casing (11), thereby compressing the clips (20),
- a step of securing the handle (4) on the frame (13) by clipping.
